# EUROPEAN PATENT APPLICATION

(11) **EP 4 391 564 A1**
(43) Date of publication of application: **26.06.2024**
(21) Application number: 22215649.9
(22) Date of filing: 21.12.2022
(51) Int. Cl.: H04N 21/8549, H04N 21/2187, H04N 21/234, H04N 21/25, H04N 21/44, H04N 21/845

(54) **METHOD AND SYSTEM OF PROCESSING A VIDEO STREAMING BROADCAST IN REAL-TIME TO CREATE A VIDEO SUMMARY**

(30) Priority: 19.12.2022 PT 2022118410
(71) Applicant: NOS Inovação, S.A., 4460-191 Senhora da Hora (PT)
(72) Inventor: PINTO SEQUEIRA DOS SANTOS GRAÇA, JORGE FILIPE, SENHORA DA HORA (PT); NUNES FERREIRA, JOÃO MIGUEL, SENHORA DA HORA (PT); FERREIRA MARTINS, CARLOS MANUEL, SENHORA DA HORA (PT); DAVID RECHENA, PEDRO MIGUEL, SENHORA DA HORA (PT); PIMENTEL FERNANDES MAIO, CAROLINA, SENHORA DA HORA (PT); PRETO XAVIER, TIAGO FRANCISCO, SENHORA DA HORA (PT); SOARES CAPITÃO, PEDRO MIGUEL, SENHORA DA HORA (PT); RODRIGUES FERREIRA MELO, ORLANDO DUARTE, SENHORA DA HORA (PT); SOUSA ROSA DA CRUZ FERNANDES, BRUNO DE, SENHORA DA HORA (PT)
(74) Representative: do Nascimento Gomes, Rui

(57) **Abstract**

It is described a method and system for processing a video streaming broadcast in real-time, in order to create a video summary. To this end, the method and system described are directed at detecting highlights that are important for the particular video streaming content, by using techniques to define and model said highlights. The video summarization thus consists of multiple video segments, representing a continuous portion in the original video, each of which containing a detected highlight.

## Description

### FIELD OF THE APPLICATION

The present application relates to digital video processing and analysis. More particularly, the present application relates to methods and systems for creating multimedia summaries of broadcast video streaming in real-time.

### PRIOR ART

Real time streaming, recording, and playback of videos have become more and more prevalent. Simultaneously, the available time for viewers to consume or otherwise view all of the desirable video content is decreasing. With the increased amount of video content coupled with the decreasing time available to view the video content, it becomes increasingly problematic for viewers to view all of the potentially desirable content in its entirety. Accordingly, viewers are increasingly selective regarding the video content that they select to view.

Moreover, viewing videos have historically been a passive experience between a viewer and the viewing interface. For instance, a viewer may typically push a play button to view an entire video to discover relevant content that interests the user. The time spent viewing an entire video may amount to countless hours of unproductive and wasted time viewing material not pertinent to the user.

To accommodate viewer demands, techniques have been developed to provide a summarization of the video representative in some manner of the entire video. Video summarization likewise facilitates additional features including browsing, filtering, indexing, retrieval, etc. The typical purpose for creating a video summarization is to obtain a compact representation of the original video for subsequent viewing.

Although improvements have been for users to effectively view videos, the improvements to the techniques for generating video summaries fall short in guaranteeing an efficient processing of the original video when it is broadcast in real-time, affecting the time of its availability to the viewer, which only occurs after a certain time has elapsed since the broadcast is completed.

This processing time negatively affects the viewing experience, especially when the video streaming concerns a live event, preventing the viewer from having access to a video summary of the event in a suitable time after the event's broadcast is completed.

The present solution intended to innovatively overcome such issues.

### SUMMARY OF THE APPLICATION

It is therefore an object of the present application a method and system for processing a video streaming broadcast in real-time, in order to create a video summary.

To this end, the method and system herein described are directed at detecting highlights that are important for the particular video streaming content, by using techniques to define and model said highlights. The video summarization thus consists of multiple video segments, representing a continuous portion in the original video, each of which containing a detected highlight.

Therefore, the creation of the video summary takes into account the content of the video being broadcast, in order to identify highlights. In the context of this application, a highlight is an occurrence of a particular importance of a particular type of content. For example, if the content of the video streaming relates to a sports event, such as a football match, a highlight concerns moments of high intensity in the game, such as attacking plays that end in a goal or in a goalkeeper save.

The method and system herein described therefore improve the efficiency of the viewing experience, making the video summary available in time effective manner, right after the end of the video streaming broadcast.

### DESCRIPTION OF FIGURES

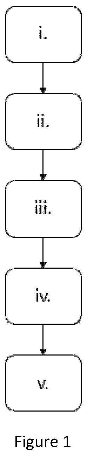

Figure 1 - representation of an embodiment of the method described in the present application, wherein the reference signs represent:
i. method step for receiving a video streaming from a broadcaster;
ii. method step for processing the video streaming in order to identify video segments within which a highlight may be detected;
iii. method step for analysing metadata of each identified video segment and for determining a metadata classification score;
iv. method step for defining a threshold metadata-based classification;
v. creating a visually-presentable video summary of the video streaming broadcast.

### DETAILED DESCRIPTION

The more general and advantageous configurations of the present application are described in the Summary section. Such configurations are detailed below in accordance with other advantageous and/or preferred embodiments of implementation of the method and system herein described.

The present application relates to a computer implemented method of processing a video streaming broadcast in real-time, in order to create a video summary. The following described method steps and their orderly execution guarantee the efficient processing of a video streaming broadcast, in particular, related to a live event content, allowing the user to have access to the respective video summary in a short period of time after the event has ended.

In a first step of the method, a video streaming broadcast is received from a broadcaster, wherein said video streaming comprises a plurality of sequential frames.

A video streaming relates to an audio-visual media content program, that is to be displayed on a client's device, being broadcasted from a broadcast source such as satellite, cable, internet, etc. In this context, a client device is intended to encompass set top boxes, satellite receivers, digital video recorders, and the like. A client device may also be embodied in software and/or hardware that facilitate the reception and display of events from a broadcast source of any suitable type (e.g., satellite, Internet protocol, wireless, etc.).

In a second step of the method, the received video streaming is processed in order to identify video segments within which a highlight may be detected.

To this end, and in a particular embodiment, the identification of a plurality of video segments involves training a machine learning module using a training dataset adapted for detection of highlights. Then, the video streaming is supplied to the machine learning module trained for identifying highlight within the video streaming. As already explained, a highlight is an occurrence of a particular importance of a particular type of content, referring to specific actions taking place during the video content. Consequently, a highlight corresponds to a particular temporal location within the video streaming, related to said occurrence's specific instant of time. Once a possible highlight is detected, metadata is generated comprising a timestamp identifying the particular temporal location within the video streaming corresponding to said possible highlight. Finally, the video streaming is processed to define a video segment containing the frame or set of frames associated to the timestamp identifying a particular temporal location within said video streaming, by identifying segment starting point and segment endpoint boundaries, wherein a segment starting point corresponds to a frame prior to said timestamp and a segment endpoint corresponds to a frame subsequent to said timestamp.

In order to train the machine learning module, a training dataset may be used comprising a plurality of training video clips, each training video clip capturing moments immediately preceding the occurrence of a highlight. More particularly, each training video clip may have a maximum duration of 6 seconds. In this way, it is possible to train the machine learning module only with the moments immediately preceding the occurrence (highlight) that is intended to be detected, which represents an advantage in terms of effectiveness in predicting said occurrence.

Additionally, a Kinetics dataset may also be used for training the machine learning module. As a consequence of the combination of short training video clips with the Kinetics dataset adapted for human action recognition, an effective compromise is reached between processing load, processing speed and effectiveness in detecting a highlight.

In one embodiment of the method, the trained machine learning module is also configured to classify the highlights into a plurality of classes. For example, considering that the video streaming content relates to a football match, it is possible to classify a highlight into a goal class, if said highlight relates to a goal that was scored, or into a no-goal class, if it relates to a missed goal-opportunity.

In a third step of the method, metadata of each identified video segment is analysed and a metadata classification score is determined based on a prediction of the video segment containing a highlight. Such metadata classification score may be determined based on the metadata and/or analysis of video streaming content data resulting from image processing.

For example, considering that the video streaming content relates to a football match, a "play" may be defined as a sequence of actions defined by the rules of football. In particular, the sequence of actions of a "play" may be defined as the time generally at which the ball is put into play (e.g., a time based upon when the ball is put into play) and the time generally at which when the ball is considered out of play (e.g., a time based upon when the ball is considered out of play). Normally the "play" would include a related series of activities that could potentially result in a highlight, such as for example, an attacking move that creates a goal-scoring opportunity. As such, the determination of the metadata classification score for each video segment implies the identification of "plays" likely to represent a highlight. A larger score of a video segment indicates a higher likelihood that said video segment contains a highlight than another video segment having a smaller score.

In another embodiment, the metadata classification score may be computed for a video segment by averaging the score determined for each frame of the video segment, resulted from applying image processing techniques to each video segment frame.

In a fourth step of the method, a threshold metadata-based classification value is defined, and the video segments whose metadata classification score is bigger than the define threshold are selected. This threshold value refers to the "intensity interval" that can vary between 0 and 1, where values closer to 1 represent the most intense moments, that is, where the probability of occurrence of a highlight is greater. In one embodiment, the established threshold metadata-based classification value is 0.9, allowing to reach an effective compromise in the detection of highlights.

Finally, in a fifth step, a visually-presentable video summary of the video streaming broadcast is created, including the selected video segments. The video summary including fewer frames than said video streaming broadcast, that is, the original video.

In one embodiment of the method, the creation of the visually-presentable video summary involves prioritizing the selected video segments according to a priority rule and creating the visually-presentable video summary including a sequence of video segments ordered according to the priority rule.

Said priority rule, may relate to metadata classification score, particularly, by defining an order for the selected video segments based on the respective metadata classification score. In one embodiment, the priority rule defines ordering selected video segments in descending order of their respective metadata classification score.

Alternatively, the priority rule may relate to highlight classification, particularly, by defining an order of the selected video segments according to the class of the respective highlight.

It is also an object of the present application, a system for processing a video streaming broadcast in real-time. The system comprises one or more processors configured to implement the method already described.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A computer implemented method of processing a video streaming broadcast in real-time, comprising the steps of:
i. receiving a video streaming from a broadcaster, said video streaming comprising a plurality of sequential frames;
ii. processing the received video streaming in order to identify video segments within which a highlight may be detected;
iii. analysing metadata of each identified video segment and determining a metadata classification score; wherein the metadata classification score is a prediction of the video segment containing a highlight;
iv. defining a threshold metadata-based classification value and selecting the video segments whose metadata classification score is bigger than the define threshold;
v. creating a visually-presentable video summary of the video streaming broadcast by including the selected video segments, where said video summary includes fewer frames than said video streaming broadcast.

2. The method according to claim 1, wherein the step of processing the received video streaming in order to identify a plurality of video segments within which a highlight may be detected, comprises:
- training a machine learning module using a training dataset adapted for detection of highlights;
- supplying the video streaming to the machine learning module to identify a highlight within the video streaming; a highlight corresponding to a particular temporal location within the video streaming;
- generating metadata comprising a timestamp identifying a particular temporal location corresponding to a possible highlight;
- processing the video streaming to define a video segment containing the frame or set of frames associated to the timestamp identifying a particular temporal location in said event, by identifying segment starting point and segment endpoint boundaries; wherein a segment starting point corresponds to a frame prior to said timestamp and a segment endpoint corresponds to a frame subsequent to said timestamp.

3. The method according to claim 2, wherein the training dataset comprises a plurality of training video clips, each training video clip capturing moments immediately preceding the occurrence of a highlight.

4. The method according to claim 3, wherein each training video clip has a maximum duration of 6 seconds.

5. The method according to claims 3 or 4, wherein the machine learning module is also trained using a Kinetics dataset adapted for human action recognition.

6. The method according to any of the previous claims 2 to 5, wherein the trained machine learning module is configured to classify the highlights into a plurality of classes.

7. The method according to any of the previous claims, wherein the step of creating a visually-presentable video summary of the video streaming broadcast comprises:
- prioritize the selected video segments according to a priority rule;
- creating the visually-presentable clip including a sequence of video segments ordered according to the priority rule;

8. The method according to claim 7 wherein the priority rule defines ordering selected video segments in a descending order of the respective metadata classification score.

9. The method according to claim 6 and 7 wherein the priority rule defines ordering selected video segments according to the class of the respective highlight.

10. The method according to any of the previous claims, wherein the video streaming is a sports video; particularly, the sport being football.

11. The method according to claim 10, wherein a highlight relates to a goal play or to a goal-scoring opportunity play.

12. The method according to claims 6 and 11, wherein the trained machine learning module is configured to classify the highlights into at least the following classes:
- goal class, if the highlight relates to a goal play; and
- no-goal class, if the highlight relates to a missed goal-opportunity play.

13. System for processing a video streaming broadcast in real-time, comprising one or more processors configured to implement the method of claims 1 to 12.
